# EUROPEAN PATENT SPECIFICATION

(11) **EP 3 222 003 B1**
(45) Date of publication and mention of the grant of the patent: **21.08.2019**
(21) Application number: 15797785.1
(22) Date of filing: 12.11.2015
(51) Int. Cl.: H04L 12/26, H04L 12/24

(54) **INLINE PACKET TRACING IN DATA CENTER FABRIC NETWORKS**
INLINE-PAKETVERFOLGUNG IN FABRIC-NETZWERKEN EINES DATENZENTRUMS
REPÉRAGE DE PAQUETS EN LIGNE DANS DES RÉSEAUX À MATRICE DE CENTRE DE DONNÉES

(30) Priority: 18.11.2014 US 201462081061 P; 13.02.2015 US 201514621582
(43) Date of publication of application: 27.09.2017
(73) Proprietor: Cisco Technology, Inc., San Jose, CA 95134-1706 (US)
(72) Inventor: KONDURU, Satyadeva, Prasad, San Jose, CA 95136 (US); BANDARU, Bharat, Kumar, San Jose, CA 95131 (US)
(74) Representative: Kazi, Ilya
(86) International application number: PCT/US2015/060270
(87) International publication number: WO 2016/081261

(56) References cited:
- US-A- 5 648 965
- US-A1- 2005 232 239

## Description

### TECHNICAL FIELD

The present disclosure relates to data center fabric networks.

### BACKGROUND

Data center fabric solutions, such as Leaf-Spine architectures, involve complex routing and load balancing algorithms to send a packet from one node to another in the data center fabric. In fabrics using dynamic load balancing schemes, the same packet flow can take a different path at different times based on the bandwidth it consumes. Traditional packet trace utilities inject a packet to the desired destination, but it may not trace the actual packet flow because the packet hashes may not match.

US 5,648,965 discloses a system in which a packet filter can be programmed by a remote controller to detect packets meeting a particular criterion and to report detection of these packets to the controller. The reports from the packet filter are collected and analyzed by the remote controller. US 2005/232239 discloses a system in which tracing of live packet data in a network is performed by discovering the measurement path, setting up dynamic filters along the path to collect traffic information, and collecting data as detected by the dynamic filters. Collected data is sent to a measuring entity.

### BRIEF DESCRIPTION OF THE DRAWINGS

FIG. 1 is a block diagram showing a data center fabric network in which packet tracing is performed according to example embodiments presented herein.
FIG. 2 is a more detailed block diagram showing components of a network controller and individual data center nodes (e.g., switches) configured to perform packet tracing according to example embodiments presented herein.
FIG. 3 is a diagram similar to FIG. 1, but showing how dynamic load balancing can change a packet path, and how the packet tracing techniques can adapt to such dynamic load balancing (and a packet drop in the new path) according to example embodiments presented herein.
FIG. 4 is a flow chart depicting a process for packet tracking according to example embodiments presented herein.

### DESCRIPTION OF EXAMPLE EMBODIMENTS

### Overview

Presented herein are embodiments for tracing paths of packet flows in a data center fabric network. Filters are configured on nodes (e.g., switches) in the data center fabric network for a particular packet flow. Numerous such filters can be configured on each of the nodes, each filter for a different packet flow. When a filter detects a match, it outputs a log of such occurrence to a network controller. The network controller uses log data sent from the nodes as well as knowledge of the network topology (updated as changes occur in the network) to determine the path for a particular packet flow in the data center fabric network.

Thus, from the perspective of the network controller, a method is provided according to claim 1.

### Detailed Description

There are no techniques available that can accurately trace a specific packet flow in current advanced data center fabric networks. In accordance with embodiments presented herein, packet path tracing can be done "inline" on the actual packet flow itself in data center fabric networks. This avoids the need to inject a new packet. Performing packet path tracing inline can also quickly pinpoint where and why in the network, a packet flow is getting dropped if it is because of a forwarding drop.

The techniques involve using filters in the network switches (data center nodes) and analyzing the filter output with the network topology information to generate ("stitch") the path of a packet in the network.

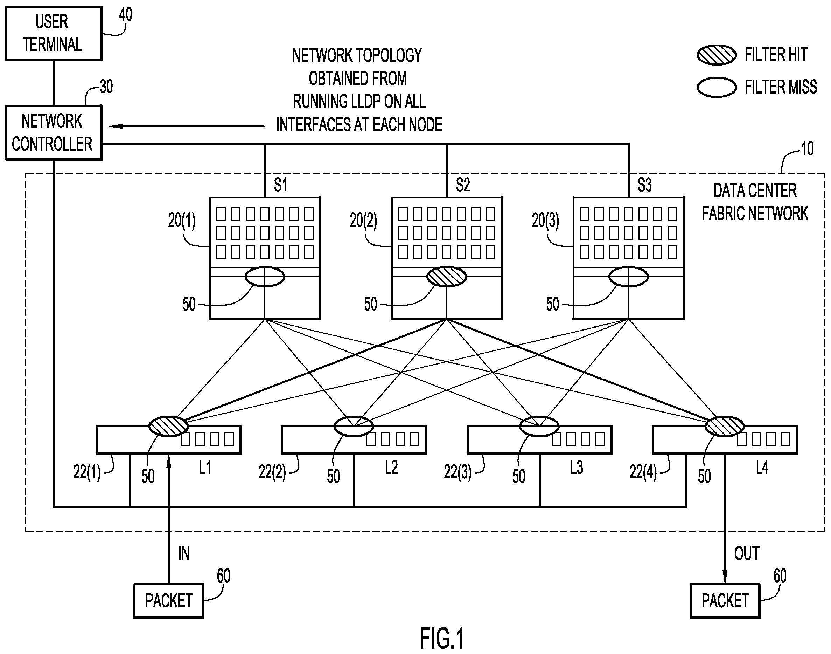

Reference is first made to FIG. 1. FIG. 1 shows a data center fabric network 10 that includes a plurality of data center switches (more generally referred to as data center nodes) arranged in a Spine-Leaf architecture. For example, the data center fabric includes spine nodes S1, S2 and S3 and leaf nodes L1, L2, L3 and L4. Connections between the spine and leaf nodes are such that each leaf node is connected to one or more spine nodes. The spine nodes S1, S2 and S3 are shown at reference numerals 20(1), 20(2) and 20(3), and the leaf nodes are shown at reference numerals 22(1), 22(2), 22(3) and 22(4). This a simplified diagram and it should be understood that there are typically numerous more nodes in an actual network deployment.

A network controller 30 is in communication with each of the spine nodes S1, S2 and S3 and with each of the leaf nodes L1, L2, L3 and L4. A user (e.g., a network administrator) can log onto the network controller (locally or remotely via the Internet) from a user terminal 40. The user terminal 40 may be a desktop computer, server, laptop computer, or any computing/user device with network connectivity and a user interface.

The topology of the fabric network can change dynamically as some nodes may go down. With the Link Layer Discovery Protocol (LLDP) always running between the nodes, the current topology is always available at the network controller 30. In addition to the topology change, the nodes may also perform dynamic load balancing techniques to avoid congested paths in the network. Both of these factors can change the path taken by a packet flow.

FIG. 1 shows an example in which a filter 50 for a particular packet/traffic flow is configured on all of the nodes in the data center fabric 10. That is, parameters for the filter 50 matching the desired packet flow to be traced are configured on all the nodes. To trace a packet or packet flow, the filter 50 composed of data for one or more fields of the packet is configured on all the nodes in the data center network fabric. A packet 60 enters the data center network fabric 10 at leaf node L1 as shown in FIG. 1. Whenever a packet matches the parameters of a filter, the node logs the information and/or raises an event to the processor in the node. In the example of FIG. 1, the nodes marked with filters 50 having the cross-hatched pattern and the nodes where the packet flow hit ("matched") the filter 50, that is, at nodes L1, S2 and L4.

When a filter hit (match) occurs, output is generated including, among other things, information identifying the incoming interface (port) on the node at which the packet is received on the node where the filter hit occurs. This information is sent from the nodes where the filter hits occur to the network controller 30.

The network controller 30 correlates the nodes at which a filter hit is reported with the network topology of the fabric. As described above, the network topology of the fabric can be obtained from simple link level protocols like LLDP, which publishes all the neighbors of a given switch. By looking up the incoming interface information in an LLDP or other similar database, the network controller 30 can determine the neighbor switch that sent the packet. By deducing this information at every node where the packet is seen, the entire packet path can be determined. Thus, the network controller 30 analyzes the filter hit information, including the incoming interface of the packet on the nodes that hit the filter, against the network topology (obtained for example using LLDP) information to build the entire path of the packet flow in the data center fabric network.

The system depicted in FIG. 1 may be configured to operate in accordance with an Application Centric Infrastructure (ACI). ACI in the data center is an architecture with centralized automation and policy-driven application profiles. ACI delivers software flexibility with the scalability of hardware performance. ACI includes simplified automation by an application-driven policy model, centralized visibility with real-time, application health monitoring, and scalable performance and multi-tenancy in hardware.

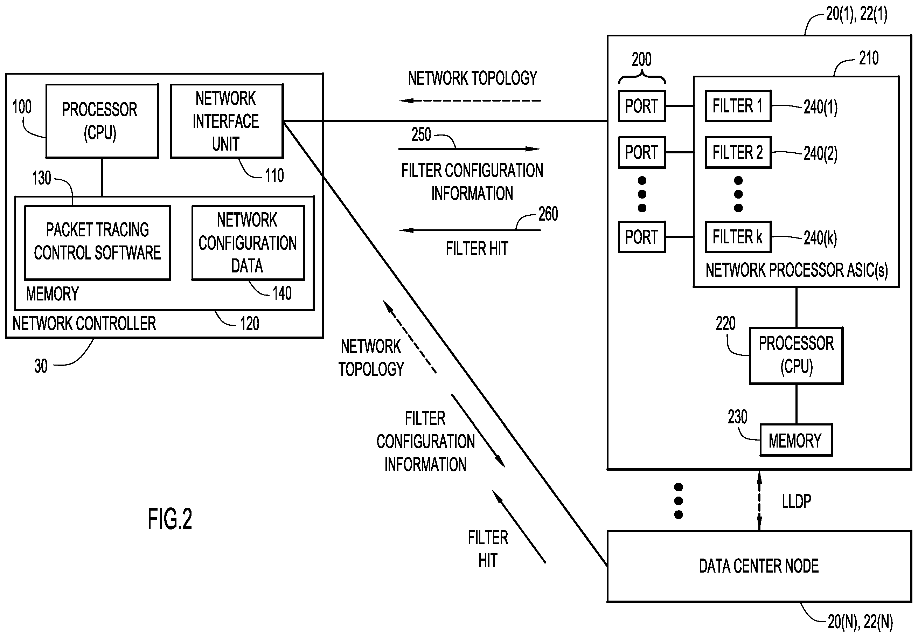

Reference is now made to FIG. 2. FIG. 2 shows in more detail the network controller 30 and the relevant components of data center nodes that support the embodiments presented herein. The network controller 30 includes a processor (e.g., a central processing unit) 100, a network interface unit (e.g., one or more network interface cards) 110, and memory 120. The memory 120 stores instructions for packet tracing control software 130 and also network configuration data 140 indicating up-to-date network topology of the data center fabric network obtained by running LLDP on all the interfaces at each node.

The data center nodes, referred to by reference numerals 20(1), 22(1) - 20(N),22(N), include a plurality of ports 200, one or more network processor Application Specific Integrated Circuit (ASICs) 210, a processor 220 and memory 230. Within the network processor ASICs 210 there are one or more configurable filters 240(1)-240(N), shown as Filter 1 - Filter N. These are the filters that the network controller 30 can program/configure on each data center node to track certain packet flows. The network controller 30 sends filter configuration information 250 in order to configure that same filter on each data center node for each packet flow to be tracked. For example, Filter 1 would be configured with appropriate parameters/attributes on each data center node to track packet flow 1, Filter 2 would be configured with appropriate parameters/attributes on each data center node to track packet flow 2, and so on. The data center nodes return to the network controller filter hit information 260. As generally described above, the filter hit information 260 to be logged at the network controller includes the information identifying the incoming interface of the packet at the node where the filter match ("hit") occurred. The network processor ASICs 210 may be further capable of capturing additional forwarding information like forward or drop packet action, next hop details etc. In one form, the filters are instantiated with Embedded Logic Analyzer Module (ELAM) technology. However, in general, the filters may be implemented using configurable digital logic in the network processor ASICs, or in software stored in the memory and executed by the processor within each data center node.

The memory 130 in the network controller 30 and the memory 230 in the data center nodes may include read only memory (ROM), random access memory (RAM), magnetic disk storage media devices, optical storage media devices, flash memory devices, electrical, optical, or other physical/tangible memory storage devices. Thus, in general, the memory shown in FIG. 2 may include one or more tangible (non-transitory) computer readable storage media (e.g., a memory device) encoded with software comprising computer executable instructions and when the software is executed (by the controller) it is operable to perform the operations described herein.

The filter can be based on any field of a packet, e.g., any field in the L2 header, L3 header or L4 header of a packet. Examples of packet fields/attributes that may be used for a packet filter include (but are not limited to):
Source media access control (MAC) address (inner and/or outer depending whether tunneling is used)
Destination MAC address (inner and/or outer depending whether tunneling is used)
Source Internet Protocol (IP) address (inner and/or outer depending whether tunneling is used)
Destination IP address (inner and/or outer depending whether tunneling is used)
Domain name of the node (switch)
Port number
Layer 4 (e.g., Universal Datagram Protocol (UDP) or Transport Control Protocol (TCP) Source Port or Destination Port
Virtual Network Identifier (VNID) for a Virtual Extensible Local Area Network (VxLAN) packet
Virtual Local Area Network (VLAN) identifier

Values for one or more of these fields would be set. If a packet arrives at a node that has a value(s) that matches the value set for a corresponding field in the filter, then a match is declared.

The following is example output that may be generated by filters at nodes in a network. Naming conventions are used for the various nodes, but this is arbitrary.

List of Switches in the network where a particular filter is configured:
ifav43-leaf2,ifav43-leaf3,ifav43-leaf4,ifav43-leaf6,ifav43-leaf7,ifav43-leaf8,ifav43-leaf9,ifav43-leaf5 ,ifav43 -leaf1 ,ifav43 -spine 1
ingress-tor (top of rack): 43-leaf5
inner-dip: 240.121.255.232
log_file: /tmp/1
in_select 4 out_select 5
Starting ELAM on ifav43-leaf2
Starting ELAM on ifav43-leaf3
Starting ELAM on ifav43-leaf4
Starting ELAM on ifav43-leaf6
Starting ELAM on ifav43-leaf7
Starting ELAM on ifav43-leaf8
Starting ELAM on ifav43-leaf9
Starting ELAM on ifav43-leaf5
Starting ELAM on ifav43-leafl
Starting ELAM on ifav43-spine1
LC 1
LC 3
Capturing ELAM on ifav43-leaf2
Capturing ELAM on ifav43-leaf3
Capturing ELAM on ifav43-leaf4
ifav43-leaf4 ASIC 0 INST 1 DIR EGRESS MATCHED
ifav43-leaf4 -> 43-spine1 Eth1/49 120 BR Eth3/33
Capturing ELAM on ifav43-leaf6
ifav43-leaf6 ASIC 0 INST 1 DIR EGRESS MATCHED
ifav43-leaf6 -> 43-spine1 Eth1/49 120 BR Eth3/11
Capturing ELAM on ifav43-leaf7
ifav43-leaf7 ASIC 0 INST 1 DIR EGRESS MATCHED
ifav43-leaf7 -> 43-spine1 Eth1/59 120 BR Eth1/29
Capturing ELAM on ifav43-leaf8
Capturing ELAM on ifav43-leaf9
Capturing ELAM on ifav43-leaf5
ifav43-leaf5 ASIC 0 INST 0 DIR INGRESS MATCHED
Capturing ELAM on ifav43-leafl
ifav43-leafl ASIC 0 INST 1 DIR EGRESS MATCHED
ifav43-leafl -> 43-spine1 Eth1/49 120 BR Eth1/33
Capturing ELAM on ifav43-spine1
LC 1
LC 3
ifav43-spine1 ASIC 1 INST 3 DIR EGRESS MATCHED
ifav43-spine1 ASIC 0 INST 3 DIR EGRESS MATCHED
ifav43-spine1 ASIC 1 INST 1 DIR INGRESS MATCHED
ifav43-spine1 -> 43-leaf5 Eth3/23 120 BR Eth1/49
ifav43-spine1 ASIC 1 INST 3 DIR EGRESS MATCHED
TOR INGRESS: ['43-leaf5']
SPINE INGRESS: ['43-leaf5:Eth1/49::Eth3/23:43-spine1']
SPINE EGRESS: ['43-spine1', '43-spine1', '43-spine1']
TOR EGRESS: ['43-spine1 :Eth3/33::Eth1/49:43-leaf4', '43-spine1:Eth3/11::Eth1/49:43-leaf6', '43-spine1:Eth1/29::Eth1/59:43-leaf7', '43-spine1:Eth1/33::Eth1/49:43-leaf1']
Ingress TOR: 43-leaf5

The path of the packet determined from data captured from the nodes where matches occurred:

| Input Port | Switch | Output Port |
|---|---|---|
| | 43-leaf5 | Eth1/49 |
| Eth3/23 | 43-spine1 | Eth3/33 |
| Eth1/49 | 43-leaf4 | |

Thus, the network controller 30 receives data output from the filters that had a match, and builds a database from that data. Using the network configuration information stored (and continuously updated) at the network controller 30, the network controller 30 can then build a list indicating the nodes along the path of the packet flow.

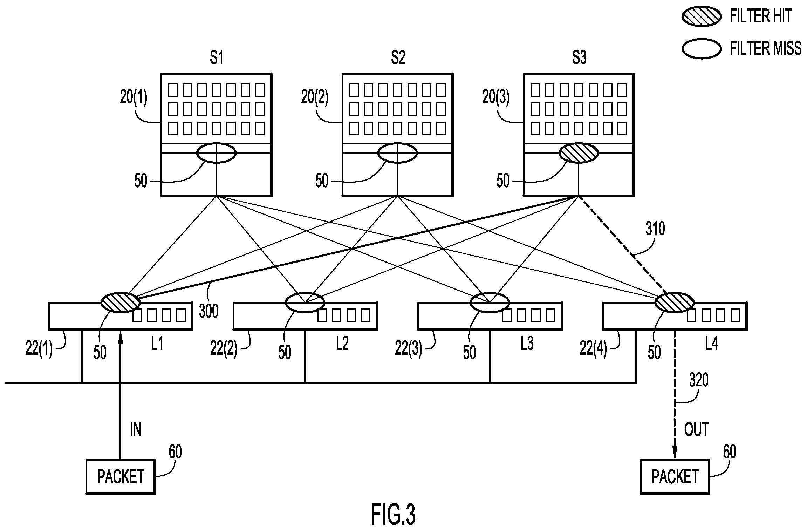

Reference is now made to FIG. 3. FIG. 3 is similar to FIG. 1, but illustrates an example of a packet path 300 changing due to dynamic load balancing in the data center network fabric. Dynamic load balancing can cause a packet flow to change its path because of various conditions, such as changes in bandwidth of the flow, congestion of the network, one or more nodes going down, etc.

Furthermore, FIG. 3 shows that in any path, e.g., the new path, the packet flow can get dropped because of various reasons. If the customer or user chooses to run the inline packet tracing tool at regular intervals, it can show the packet path changing from one set of nodes to another. Any drop in any path can be debugged quickly as the forwarding information is captured from all the nodes in the path.

FIG. 3 shows the packet path 300 changing through a new set of nodes and the flow getting dropped at node 'S3'. The dotted lines 310 and 320 show the intended path if the flow has not been dropped. A review of the forwarding state at node S3 would pinpoint the problem to be either a configuration mistake or a software programming error.

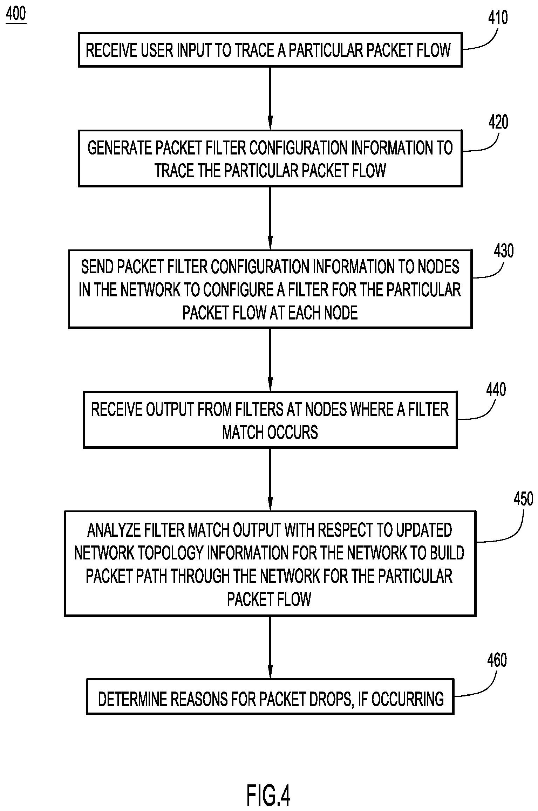

Turning now to FIG. 4, a flow chart is shown for a process 400 according to the embodiments presented herein. At 410, a user (e.g., a network administrator) supplies, via a user terminal, input data describing a particular packet flow to be traced. This data is received as input at the network controller. At 420, the network controller generates packet filter configuration information (using any of the packet field parameters described above) to trace the particular packet flow through the data center fabric network. The network controller may supply the filter configuration information to all nodes in the network. At 430, the network controller sends the packet filter configuration information to nodes in the network to configure a filter for the particular packet flow at each node. For example, ACI uses Extensible Markup Language (XML) or JavaScript Object Notation (JSON) type form to communicate between the network controller and the nodes. The filter output is sent as XML or JSON. At this point, the filters at the nodes begin operating to detect a match against packets that pass through the respective nodes. When a match occurs at a node, the node sends log data to the network controller, as described above.

At 440, the network controller receives the log data from the filters at nodes where a match occurs. At 450, the network controller analyzes the filter match output with respect to network topology information for the network in order to build a packet path through the network for the packet flow. At 460, the network controller may determine reasons for packet drops, if such drops are determined to occur in the path of a packet flow.

To summarize, presented herein are techniques for a tool that takes a list of nodes (e.g., switches) and packet flow parameters for a particular packet flow in order to trace and produce the packet path for the flow. ELAM packet filters in the network processor ASICs may be used to filter the packet and log the forwarding information, which is sent back to the network controller. In data center fabrics using dynamic load balancing schemes, these techniques give an accurate packet path of a specific packet flow at a given time. This also avoids the need to inject a debug packet like in existing tools. The tool also provides a method to collect forwarding data from all the nodes in the network to quickly debug where and why a packet flow is getting dropped in the network.

Thus, these techniques can determine where a packet flow is getting dropped in the case the receiving node does not receive the packets. The last node where the packets hit the filter is the 'culprit' node in the path. If the network processor ASIC of that node is capable of giving the drop reason, then the drop reason can be captured by the filter output, which can help in quick triaging of the problem.

There are many advantages to these techniques. In particular, in dynamic load balancing schemes, the same packet flow can take different paths at different times based on its bandwidth. A traditional traceroute utility cannot inject a packet in the same packet flow, and therefore it cannot help in debugging a specific packet flow if it gets dropped. There are no known utilities that can gather forwarding data from all the nodes where the packet flow was seen, in order to be able to debug any packet flow drops in a fabric network. The techniques presented herein can trace a packet path without needing to send additional debug packets.

In summary, in one form, a method is provided according to claim 1.

In another form, a system is provided according to claim 7.

In still another form, an apparatus is provided according to claim 8.

The above description is intended by way of example only.

## Claims

1. A method comprising:
at a network controller that is in communication with a plurality of nodes in a network:
generating (420) filter configuration information to track a particular packet flow, the filter configuration information including one or more parameters of the particular packet flow;
sending (430) the filter configuration information to the plurality of nodes in order to configure a filter for the particular packet flow at each of the plurality of nodes;
receiving (440), from one or more of the plurality of nodes where a filter match occurs, output indicating that a packet matching the filter configuration information for the filter for the particular packet flow passed through the associated node where the filter match occurred, wherein the output includes information indicating whether the packet matching the filter configuration information was forwarded, whether the packet matching the filter configuration information was dropped by the associated node, and any associated next hop details of the packet at the associated node;
analyzing (450) the output received from the one or more of the plurality of nodes where a filter match occurs to determine a path through the network for the particular packet flow; and
based on the analyzing, determining (460) a specific node at which the packet is dropped and a cause of the packet drop for the particular packet flow.

2. The method of claim 1, wherein the filter configuration information is based on any one or more fields of a packet.

3. The method of claim 1, wherein analyzing is performed with respect to network topology information for the network.

4. The method of claim 3, further comprising receiving, from the plurality of nodes, information indicating changes in network topology of the network, and wherein the analyzing is based on updated network topology information received from the plurality of nodes.

5. The method of claim 1, wherein generating comprises generating filter configuration information for each of a plurality of filters for a corresponding one of a plurality of packet flows to be tracked through the network, sending comprises sending filter configuration for each of the plurality of packet flows, receiving comprises receiving output indicating packets matching any of the plurality of filters passed through associated nodes in the network, and analyzing comprises analyzing the output to determine a path for one or more of the plurality of packet flows through the network.

6. The method of claim 1, further comprising receiving user input to trace the particular packet flow, and wherein generating is performed based on the user input.

7. A system comprising :
a plurality of nodes (20, 22) in a network, each node (20, 22) including a plurality of ports (200) and one or more network processors (210) that are used to process packets that are received at one of the plurality of ports (200) for routing in the network;
a network controller (30) in communication with the plurality of nodes (20, 22), wherein the network controller (30) is configured to perform all steps of a method according to any one of the preceding claims.

8. An apparatus (30) comprising :
a network interface unit (110) configured to enable communications over a network;
a memory (120);
a processor (100) coupled to the network interface unit (110) and the memory (120), wherein the processor is configured to perform a method according to any of claims 1 to 6.

## Patentansprüche

1. Verfahren, das Folgendes aufweist:
an einem Netzwerkcontroller, der mit mehreren Knoten in einem Netzwerk in Verbindung ist:
Generieren (420) von Filterkonfigurationsinformationen zum Verfolgen eines jeweiligen Paketflusses, wobei die Filterkonfigurationsinformationen einen oder mehr Parameter des jeweiligen Paketflusses beinhalten;
Senden (430) der Filterkonfigurationsinformationen an die mehreren Knoten, um an jedem der mehreren Knoten ein Filter für den jeweiligen Paketfluss zu konfigurieren;
von einem oder mehr der mehreren Knoten, an dem bzw. denen es eine Filterübereinstimmung gibt, Empfangen (440) einer Ausgabe, die angibt, dass ein Paket, das mit den Filterkonfigurationsinformationen für das Filter für den jeweiligen Paketfluss übereinstimmt, durch den zugeordneten Knoten hindurchgeführt wurde, an dem es die Filterübereinstimmung gab, wobei die Ausgabe Informationen, die angeben, ob das mit den Filterkonfigurationsinformationen übereinstimmende Paket weitergeleitet wurde, ob das mit den Filterkonfigurationsinformationen übereinstimmende Paket vom zugeordneten Knoten verworfen wurde, und jedwede zugeordneten Details des nächstens Hops des Pakets am zugeordneten Knoten enthält;
Analysieren (450) der von den ein oder mehr der mehreren Knoten, an denen es eine Filterübereinstimmung gibt, empfangenen Ausgabe, um einen Pfad durch das Netzwerk für den jeweiligen Paketfluss zu ermitteln; und
auf Basis des Analysierens Ermitteln (460) eines spezifischen Knotens, an dem das Paket verworfen wird, und eine Ursache für das Verwerfen des Pakets für den jeweiligen Paketfluss.

2. Verfahren nach Anspruch 1, wobei die Filterkonfigurationsinformationen auf ein oder mehr Feldern eines Pakets basieren.

3. Verfahren nach Anspruch 1, wobei das Analysieren in Bezug auf Netzwerktopologieinformationen für das Netzwerk durchgeführt wird.

4. Verfahren nach Anspruch 3, das ferner das Empfangen von Informationen, die Änderungen der Netzwerktopologie des Netzwerks angeben, von den mehreren Knoten aufweist und wobei das Analysieren auf von den mehreren Knoten empfangenen aktualisierten Netzwerktopologieinformationen basiert.

5. Verfahren nach Anspruch 1, wobei das Generieren das Generieren von Filterkonfigurationsinformationen für jedes von mehreren Filtern für einen entsprechenden von mehreren zu verfolgenden Paketflüssen durch das Netzwerk aufweist, das Senden das Senden einer Filterkonfiguration für jeden der mehreren Paketflüsse aufweist, das Empfangen das Empfangen einer Ausgabe, die mit irgendwelchen der mehreren Filter übereinstimmende Pakete angibt, die durch zugeordnete Knoten im Netzwerk hindurchgeführt wurden, aufweist und das Analysieren das Analysieren der Ausgabe zum Ermitteln eines Pfads für ein oder mehr der mehreren Paketflüsse durch das Netzwerk aufweist.

6. Verfahren nach Anspruch 1, das ferner das Empfangen einer Benutzereingabe zum Rückverfolgen des jeweiligen Paketflusses aufweist und wobei das Generieren auf Basis der Benutzereingabe durchgeführt wird.

7. System, das Folgendes aufweist:
mehrere Knoten (20, 22) in einem Netzwerk, wobei jeder Knoten (20, 22) mehrere Ports (200) und ein oder mehr Netzwerkprozessoren (210), die zum Verarbeiten von Paketen, die an einem der mehreren Ports (200) empfangen werden, zum Wegfinden im Netzwerk beinhaltet;
einen Netzwerkcontroller (30), der mit den mehreren Knoten (20, 22) in Verbindung ist, wobei der Netzwerkcontroller (30) zum Durchführen aller Schritte eines Verfahrens nach einem der vorhergehenden Ansprüche konfiguriert ist.

8. Vorrichtung (30), die Folgendes aufweist:
eine Netzschnittstelleneinheit (110), die zum Ermöglichen der Kommunikation über ein Netzwerk konfiguriert ist;
einen Speicher (120);
einen Prozessor (100), der mit der Netzschnittstelleneinheit (110) und dem Speicher (120) gekoppelt ist, wobei der Prozessor zum Durchführen eines Verfahrens nach einem der Ansprüche 1 bis 6 konfiguriert ist.

## Revendications

1. Procédé, comprenant de :
au niveau d'un contrôleur de réseau qui est en communication avec une pluralité de noeuds dans un réseau :
générer (420) des informations de configuration de filtre pour suivre un flux de paquets particulier, les informations de configuration de filtre comprenant un ou plusieurs paramètres du flux de paquets particulier;
envoyer (430) les informations de configuration de filtre à la pluralité de noeuds afin de configurer un filtre pour le flux de paquets particulier au niveau de chacun de la pluralité de noeuds;
recevoir (440), à partir d'un ou plusieurs de la pluralité de noeuds où une correspondance de filtre a lieu, une sortie indiquant qu'un paquet correspondant aux informations de configuration de filtre pour le filtre pour le flux de paquets particulier est passé par le noeud associé où la correspondance de filtre a eu lieu, dans lequel la sortie comprend des informations indiquant si le paquet correspondant aux informations de configuration de filtre a été transmis, si le paquet correspondant aux informations de configuration de filtre a été abandonné par le noeud associé, et tous les détails associés du bond suivant du paquet au niveau du noeud associé;
analyser (450) la sortie reçue à partir desdits un ou plusieurs de la pluralité de noeuds où une correspondance de filtre a lieu afin de déterminer un chemin à travers le réseau pour le flux de paquets particulier; et
sur la base de l'analyse, déterminer (460) un noeud spécifique au niveau duquel le paquet est abandonné et une cause de l'abandon du paquet pour le flux de paquets particulier.

2. Procédé selon la revendication 1, dans lequel les informations de configuration de filtre sont basées sur un ou plusieurs champs d'un paquet.

3. Procédé selon la revendication 1, dans lequel l'analyse est effectuée par rapport à des informations de topologie de réseau pour le réseau.

4. Procédé selon la revendication 3, comprenant en outre de recevoir, à partir de la pluralité de noeuds, des informations indiquant des modifications de la topologie de réseau du réseau, et dans lequel l'analyse est basée sur des informations de topologie de réseau mises à jour reçues à partir de la pluralité de noeuds.

5. Procédé selon la revendication 1, dans lequel la génération comprend de générer des informations de configuration de filtre pour chacun d'une pluralité de filtres pour un flux correspondant d'une pluralité de flux de paquets à suivre à travers le réseau, l'envoi comprend d'envoyer une configuration de filtre pour chacun de la pluralité de flux de paquets, la réception comprend de recevoir une sortie indiquant des paquets correspondant à l'un quelconque de la pluralité de filtres passés par des noeuds associés dans le réseau, et l'analyse comprend d'analyser la sortie pour déterminer un chemin pour un ou plusieurs de la pluralité de flux de paquets à travers le réseau.

6. Procédé selon la revendication 1, comprenant en outre de recevoir une entrée d'utilisateur pour suivre le flux de paquets particulier, et dans lequel la génération est effectuée sur la base de l'entrée d'utilisateur.

7. Système comprenant :
une pluralité de noeuds (20, 22) dans un réseau, chaque noeud (20, 22) comprenant une pluralité de ports (200) et un ou plusieurs processeurs de réseau (210) qui sont utilisés pour traiter des paquets qui sont reçus au niveau de l'un de la pluralité de ports (200) pour le routage dans le réseau;
un contrôleur de réseau (30) en communication avec la pluralité de noeuds (20, 22), dans lequel le contrôleur de réseau (30) est configuré pour exécuter toutes les étapes d'un procédé selon l'une quelconque des revendications précédentes.

8. Appareil (30) comprenant :
une unité d'interface réseau (110) configurée pour permettre des communications sur un réseau;
une mémoire (120);
un processeur (100) couplé à l'unité d'interface réseau (110) et à la mémoire (120), dans lequel le processeur est configuré pour exécuter un procédé selon l'une quelconque des revendications 1 à 6.
